# EUROPÄISCHE PATENTANMELDUNG

(11) **EP 3 118 748 A1**
(43) Veröffentlichungstag der Anmeldung: **18.01.2017**
(21) Anmeldenummer: 16179266.8
(22) Anmeldetag: 13.07.2016
(51) Int. Cl.: G06F 13/42

(54) **VERFAHREN ZUR UNIDIREKTIONALEN DATENÜBERTRAGUNG**

(30) Priorität: 16.07.2015 DE 102015213400
(71) Anmelder: Thales Deutschland GmbH, 71254 Ditzingen (DE)
(72) Erfinder: WINGERATH, Norbert, 71701 Schwieberdingen (DE)
(74) Vertreter: Kohler Schmid Möbus Patentanwälte

(57) **Zusammenfassung**

Ein Verfahren zur unidirektionalen Datenübertragung von einem sicherheitskritischen System (S1) zu einem unsicheren System (S2) mittels einer Datendiode (D), wobei die Datendiode (D) einen auf einer sicherheitskritischen Seite der Datendiode (D) angeordneten ersten Mikrokontroller (MK1) und einen auf einer unsicheren Seite der Datendiode (D) angeordneten zweiten Mikrokontroller (MK2) mit jeweils einer SPI-Schnittstelle (SPI1a, SPI2a) aufweist, die ein SPI-Schnittstellen-Paare bilden, ist dadurch gekennzeichnet, dass der erste Mikrokontroller (MK1) mit dem zweiten Mikrokontroller (MK2) über die SPI-Schnittstellen (SPI1a, SPI2a) verbunden wird, wobei die SPI-Schnittstelle (SPI1a; SPI1b) des ersten Mikrokontrollers (MK1) als Master und die SPI-Schnittstelle (SPI2a) des zweiten Mikrokontrollers (MK2) als Slave konfiguriert ist, und dass die Datenübertragung zwischen dem sicherheitskritischen System (S1) und dem unsicheren System (S2) über eine Datenverbindung (M) zwischen den SPI-Schnittstellen (SPI1a, SPI2a) des SPI-Schnittstellen-Paares der Mikrokontroller (MK1, MK2) erfolgt. Hierdurch wird eine schnelle und kostengünstige unidirektionale Datenübertragung realisiert.

## Beschreibung

Die Erfindung betrifft ein Verfahren zur unidirektionalen Datenübertragung von einem sicherheitskritischen System zu einem unsicheren System mittels einer Datendiode.

Ein Verfahren zur unidirektionalen Datenübertragung mittels einer Datendiode ist beispielweise bekannt aus http://en.wikipedia.org/wiki/Unidirectional network.

Bei sicherheitskritischen Anwendungen, bspw. für Diagnoseschnittstellen in der Bahntechnik ist es erforderlich, das sicherheitskritische System (System, welches vor Manipulation von außen geschützt werden muss) vor Datenübertragungen aus einem unsicheren System (System, welches nicht gegen unautorisierte Zugriffe geschützt werden kann, z.B. weil es mit öffentlichen Netzwerken verbunden ist) zu schützen.

Da herkömmliche Ethernet-Daten-Übertragungssysteme mit Kupferleitungen keine unidirektionale Datenübertragung gewährleisten können, werden für unidirektionale Datenübertragung bislang Ethernetverbindungen mit Glasfaserkabel verwendet. Diese ermöglichen zwar einen schnellen unidirektionalen Datentransfer, sind aber sehr teuer. Zudem ist über eine Glasfaserverbindung eine Datenübertragung erst möglich, wenn das sendende System (hier: das sicherheitskritische System) eine Rückmeldung vom empfangenden System (hier: unsicheres System) erhalten hat. Da dies jedoch einen Datentransfer in beide Richtungen, also auch vom unsicheren System zum sicherheitskritischen System voraussetzt, wird, um eine unidirektionale Datenübertragung zu ermöglichen, ein Empfangssignal imitiert (Ethernet Fakeout), was jedoch sehr aufwändig ist. Insbesondere wird dazu ein zusätzlicher Glasfasertransceiver benötigt.

### Aufgabe der Erfindung

Es ist daher Aufgabe der Erfindung, ein Verfahren vorzuschlagen, mit dem ohne zusätzlichen Hardware-Aufwand eine sichere unidirektionale Datenübertragung realisiert werden kann.

### Beschreibung der Erfindung

Diese Aufgabe wird erfindungsgemäß gelöst durch ein Verfahren gemäß Patentanspruch 1.

Bei dem erfindungsgemäßen Verfahren wird eine Datendiode verwendet, die einen auf einer sicherheitskritischen Seite der Datendiode angeordneten ersten Mikrokontroller und einen auf einer unsicheren Seite der Datendiode angeordneten zweiten Mikrokontroller mit jeweils einer SPI-Schnittstelle aufweist, die ein SPI-Schnittstellen-Paar bilden, aufweist. Erfindungsgemäß wird der erste Mikrokontroller mit dem zweiten Mikrokontroller über die SPI-Schnittstellen verbunden, wobei die SPI-Schnittstelle des ersten Mikrokontrollers als Master und die SPI-Schnittstelle des zweiten Mikrokontrollers als Slave konfiguriert ist. Die Datenübertragung zwischen dem sicherheitskritischen und dem unsicheren System erfolgt erfindungsgemäß über eine Datenverbindung zwischen den SPI-Schnittstellen des SPI-Schnittstellen-Paares der Mikrokontroller.

Gemäß der Erfindung werden also die SPI-Schnittstellen der Mikrokontroller für eine unidirektionale Datenübertragung innerhalb der Datendiode genutzt, so dass die Datenübertragung zwischen dem sicherheitskritischen und dem unsicheren System über eine Datenverbindung zwischen den SPI-Schnittstellen der Mikrokontroller erfolgt.

Die Mikrokontroller umfassen jeweils eine Ethernetschnittstelle zur Übertragung von Daten zwischen dem sicherheitskritischen System und der Datendiode bzw. der Datendiode und dem unsicheren System, wobei diejenige Seite der Datendiode, die über eine erste Ethernetleitung mit dem sicherheitskritischen System verbunden ist, als sicherheitskritische Seite der Datendiode und diejenige Seite der Datendiode, die über eine zweite Ethernetleitung mit dem unsicheren System verbunden ist, als unsichere Seite der Datendiode bezeichnet wird.

Eine SPI-Schnittstelle ermöglicht üblicherweise eine bidirektionale, synchrone und serielle Datenübertragung zwischen einem als Master ausgebildeten Baustein und verschiedenen als Slaves ausgebildeten Bausteinen. Da SPI-Schnittstellen nicht auf ein Empfangssignal angewiesen sind, besteht keine Notwendigkeit, eine Vorrichtung zum Erzeugen von fingierten Signalen (Ethernet-Fakeout) wie bei Datendioden-Lösungen über Ethernetschnittstellen bereitzustellen. Das erfindungsgemäße Verfahren ermöglicht somit eine einfache und kostengünstige unidirektionale Datenübertragung, wodurch eine unerwünschte Beeinflussung des sicherheitskritischen Systems durch das unsichere System vermieden werden kann.

Vorzugsweise erfolgt die Datenübertragung ausschließlich über mindestens eine MOSI-Leitung zwischen den SPI-Schnittstellen des SPI-Schnittstellen-Paares (Master und Slave). SPI-Schnittstellen eine SPI-Schnittstellen-Paares sind i.A. über drei Leitungen verbunden; in der Regel sind dies zwei Datenleitungen, nämlich Master-In-Slave-Out (MISO-Datenleitung) und Master-Out-Slave-In (MOSI-Datenleitung), und eine Taktleitung (SCLK-Leitung), wobei der Master den Takt erzeugt und damit Dauer und Geschwindigkeit der Datenübertragung bestimmt und der Slave den Takt empfängt. Bei der vorliegenden Erfindung wird die MISO-Datenleitung von den Systemen, zwischen denen Daten übertragen werden sollen, getrennt, so dass erfindungsgemäß für die Datenübertragung nur die MOSI-Datenleitung verwendet wird.

Vorzugsweise erfolgt eine Übertragung eines Taktsignals über eine SCLK-Leitung zwischen den SPI-Schnittstellen des SPI-Schnittstellen-Paares.

Vorzugsweise erfolgt die Datenübertragung zwischen den SPI-Schnittstellen ausschließlich über eine Kupfer-Datenleitung. Kupfer-Datenleitungen sind einerseits kostengünstig und ermöglichen eine Datenübertragung mit einer hohen Datenrate.

Bei einer speziellen Variante erfolgt die Datenübertragung über mehrere SPI-Schnittstellen-Paare. Beide Mikrokontroller sind dann jeweils mit mehreren SPI-Schnittstellen ausgestattet. Auf diese Weise kann die Bandbreite der Datenübertragung erhöht werden.

Vorzugsweise erfolgt die Datenübertragung und/oder die Taktübertragung zwischen den SPI-Schnittstellen über Optokoppler. Durch die inhärenten Eigenschaften der Optokoppler sind die SPI-Schnittstellen galvanisch voneinander getrennt und es kann garantiert werden, dass die Datenübertragung nur in einer Richtung erfolgt. Es ist daher in diesem Fall sehr einfach, den Nachweis der Rückwirkungsfreiheit zu führen, da eine Manipulation der Datenübertragungsrichtung in den Mikrokontrollern durch Software ausgeschlossen werden kann.

Alternativ hierzu können die Datenübertragung und/oder die Taktübertragung über einen Treiberbaustein mit Serienwiderstand in Sicherheitsbauform am Ausgang erfolgen. Durch die inhärenten Eigenschaften der Widerstände in Sicherheitsbauform sind die SPI-Schnittstellen auch bei dieser Variante so voneinander getrennt, dass eine Umkehr der Datenübertragungsrichtung durch Software-Manipulationen in den Mikrokontrollern ausgeschlossen werden kann. Auch in diesem Fall ist es daher sehr einfach, den Nachweis der Rückwirkungsfreiheit zu führen. Die Variante mit Treiberbaustein mit Serienwiderstand erlaubt zudem höhere Datenübertragungsraten als die Variante mit Optokoppler.

Vorzugsweise wird das erfindungsgemäße Verfahren in sicherheitsrelevanten Bereichen verwendet, insbesondere in der Bahntechnik, Luftfahrt, Verteidigung oder Energieversorgung.

Eine besonders bevorzugte Verwendung des erfindungsgemäßen Verfahrens ist das Auslesen von Diagnosedaten. So müssen beispielsweise in der Bahntechnik und in der Luftfahrt sicherheitskritische Diagnosedaten von einer On-Board-Unit eines Sicherungssystems zu einer Diagnoseeinheit übertragen werden, z.B. für eine Fernüberwachung eines Stellwerks. Ebenso ist das Auslesen von Diagnosedaten beispielsweise relevant für Überwachung von Verteidigungseinrichtungen und Fernüberwachung von Einrichtungen der Energieversorgung und -verteilung.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Fig. 1 zeigt einen Aufbau zur Durchführung des erfindungsgemäßen Verfahrens mit einer Datendiode über eine SPI-Schnittstelle.
Fig. 2 zeigt einen Aufbau zur Durchführung des erfindungsgemäßen Verfahrens mit einer Datendiode über mehrere SPI-Schnittstellen.
Fig. 3 zeigt einen Aufbau einer Datendiode, wobei die Datenübertragung über einen Optokoppler erfolgt.
Fig. 4 zeigt einen Aufbau einer Datendiode, wobei die Datenübertragung über einen Treiberbaustein und einen Widerstand in Sicherheitsbauweise erfolgt.

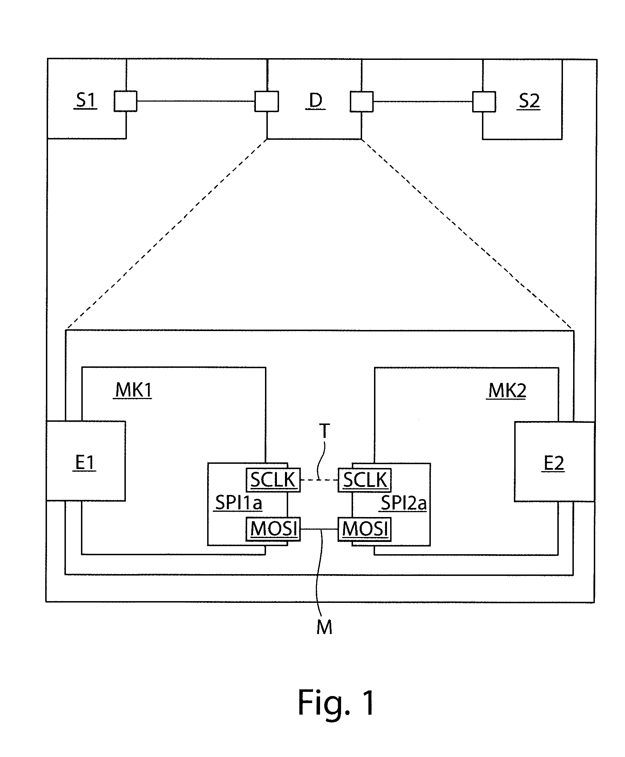

**Fig. 1** zeigt die Verbindung eines sicherheitskritischen Systems **S1** mit einem unsicheren System **S2** über eine Datendiode **D.** Die Datendiode D umfasst zwei Mikrokontroller **MK1, MK2** mit jeweils einer Ethernetschnittstelle **E1, E2**, wobei über die erste Ethernetschnittstelle E1 Daten von dem sicherheitskritischen System S1 und zur Datendiode D und über die zweite Ethernetschnittstelle E2 Daten von der Datendiode D zu dem unsicheren System S2 übertragen werden. Dazu ist das sicherheitskritische System über eine Ethernetleitung **EV1** mit dem ersten Mikrokontroller MK1 der Datendiode D verbunden. Analog hierzu ist das unsichere System S2 mit dem zweiten Mikrokontroller über eine zweite Ethernetleitung **EV2** mit der Datendiode D verbunden. Die Datenübertragung zwischen den beiden Mikrokontrollern MK1, MK2 erfolgt über die SPI-Schnittstellen SPI1a, SPI1b. Die SPI-Schnittstellen SPI1a, SPI1b der beiden Mikrokontroller MK1, MK2 sind über eine einzige MOSI-Datenleitung **M** und eine Taktleitung **T** miteinander verbunden. Es besteht keine Verbindung zwischen den beiden Mikrokontrollern MK1, MK2 über eine MISO-Datenleitung. Hierdurch wird sichergestellt, dass keine Daten vom unsicheren System S2 zum sicherheitskritischen System S1 übertragen werden können. Die Ethernetschnittstellen E1, E2 umfassen jeweils einen Transceiver, wobei der Transceiver des ersten Mikrokontrollers MK1 über die erste Ethernetleitung EV1 Daten vom sicherheitskritischen System S1 empfängt und innerhalb der Datendiode D an die erste SPI-Schnittstelle SPI1 weiterleitet. Der Transceiver des zweiten Mikrokontrollers MK1 empfängt von der zweiten SPI-Schnittstelle SPI1b innerhalb der Datendiode D weitergeleitete Daten und sendet diese über die Ethernetleitung EV2 an das unsichere System S2. Die Datenübertragung zwischen den SPI-Schnittstellen SPI1a, SPI1b erfolgt über die MOSI-Datenleitung M, welche als Kupferleitung ausgebildet sein kann.

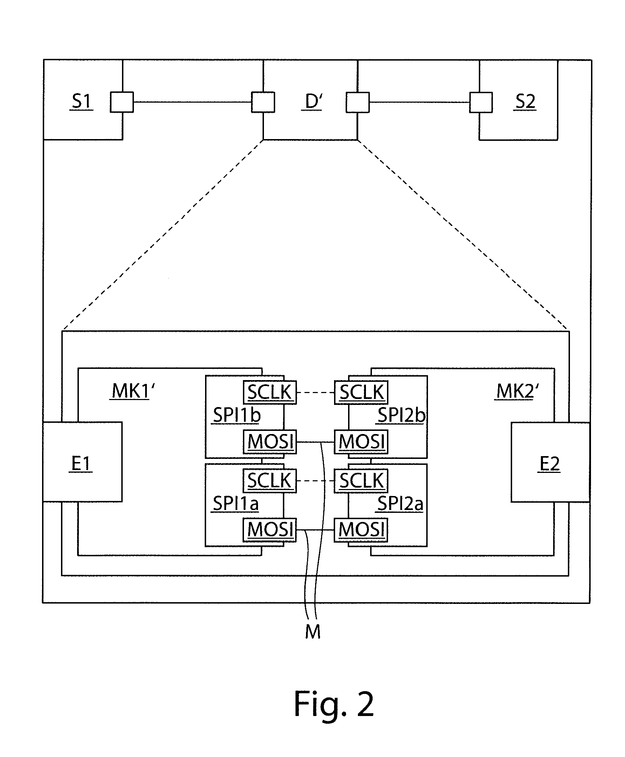

In **Fig. 2** ist ein ähnlicher Aufbau gezeigt, bei dem jedoch eine Datendiode **D'** verwendet wird, mit zwei Mikrokontrollern **MK1', MK2',** welche jeweils zwei SPI-Schnittstellen SPI1a, SPI1b, **SPI2a, SPI2b** aufweisen. Die Datenübertragung kann also gleichzeitig über zwei MOSI-Datenleitungen M erfolgen, so dass eine größere Bandbreite realisiert werden kann.

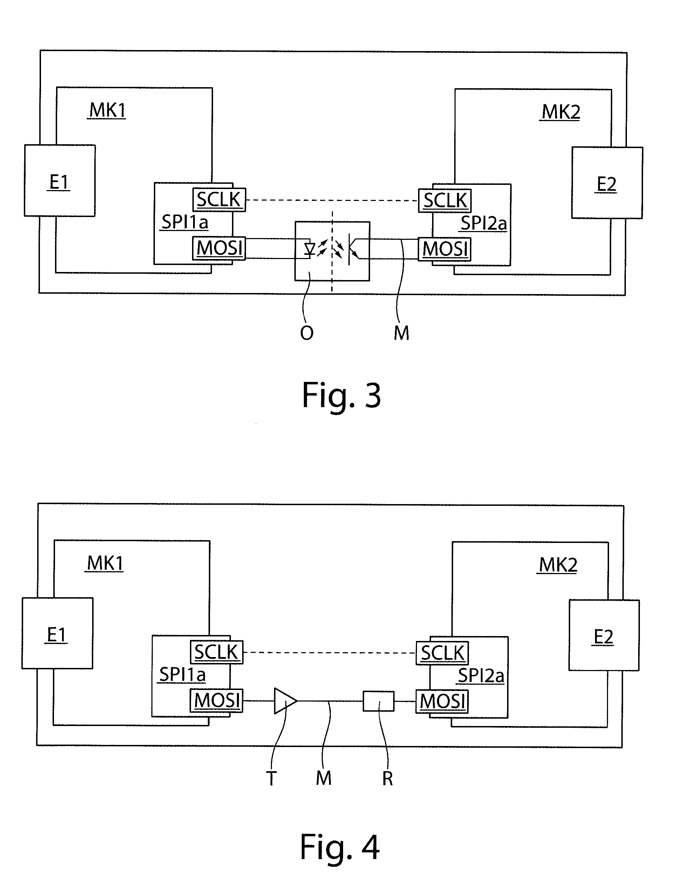

Um Rückwirkungsfreiheit zu garantieren kann die Datenübertragung zwischen dem ersten Mikrokontroller MK1 und dem zweiten Mikrokontroller MK2 über einen in der MOSI-Datenleitungen M eingebauten Optokoppler **O (****Fig. 3****)** oder einem in der MOSI-Datenleitung M angeordneten Treiberbaustein **T** und einen Widerstand **R** in Sicherheitsbauweise **(****Fig. 4****)** erfolgen.

Durch die erfindungsgemäße Verwendung der SPI-Schnittstellen der Mikrokontroller wird eine schnelle und kostengünstige unidirektionale Datenübertragung realisiert.

### Bezugszeichenliste

- D, D': Datendiode
- E1: erste Ethernetschnittstelle
- E2: zweite Ethernetschnittstelle
- EV1: Ethernetleitung zwischen Datendiode und sicherheitskritischem System
- EV2: Ethernetleitung zwischen Datendiode und unsicherem System
- MK1, MK1': erster Mikrokontroller zur Verbindung der Datendiode mit dem sicherheitskritischen System
- MK2, MK2': zweiter Mikrokontroller zur Verbindung der Datendiode mit dem unsicheren System
- M: MOSI-Datenleitung
- O: Optokoppler
- R: Widerstand in Sicherheitsbauweise
- S1: sicherheitskritischen System
- S2: unsicheres System
- SCKL: Taktleitung
- SPI1a: SPI-Schnittstelle des ersten Mikrokontrollers
- SPI1b: weitere SPI-Schnittstelle des ersten Mikrokontrollers
- SPI2a: SPI-Schnittstellen des zweiten Mikrokontrollers
- SPI2b: weitere SPI-Schnittstellen des zweiten Mikrokontrollers
- T: Treiberbaustein

## Patentansprüche

1. Verfahren zur unidirektionalen Datenübertragung von einem sicherheitskritischen System (S1) zu einem unsicheren System (S2) mittels einer Datendiode (D; D'),
wobei die Datendiode (D; D') einen auf einer sicherheitskritischen Seite der Datendiode (D; D') angeordneten ersten Mikrokontroller (MK1, MK1') und einen auf einer unsicheren Seite der Datendiode (D; D') angeordneten zweiten Mikrokontroller (MK2; MK2') mit jeweils einer SPI-Schnittstelle (SPI1a, SPI2a; SPI1b, SPI2b) aufweist, die ein SPI-Schnittstellen-Paar bilden,
wobei der erste Mikrokontroller (MK1, MK1') mit dem zweiten Mikrokontroller (MK2, MK2') über die SPI-Schnittstellen (SPI1a, SPI2a; SPI1b, SPI2b) verbunden wird, wobei die SPI-Schnittstelle (SPI1a; SPI1b) des ersten Mikrokontrollers (MK1, MK1') als Master und die SPI-Schnittstelle (SPI2a; SPI2b) des zweiten Mikrokontrollers (MK2, MK2') als Slave konfiguriert ist, und
wobei die Datenübertragung zwischen dem sicherheitskritischen System (S1) und dem unsicheren System (S2) über eine Datenverbindung (M; M') zwischen den SPI-Schnittstellen (SPI1a, SPI2a; SPI1b, SPI2b) des SPI-Schnittstellen-Paares der Mikrokontroller erfolgt.

2. Verfahren nach Anspruch 1, **dadurch gekennzeichnet, dass** die Datenübertragung ausschließlich über mindestens eine MOSI-Leitung (M; M') zwischen den SPI-Schnittstellen (SPI1a, SPI2a; SPI1b, SPI2b) des SPI-Schnittstellen-Paares erfolgt.

3. Verfahren nach einem der vorhergehenden Ansprüche, **dadurch gekennzeichnet, dass** eine Übertragung eines Taktsignals über eine SCLK-Leitung (T) zwischen den SPI-Schnittstellen (SPI1a, SPI2a; SPI1b, SPI2b) des SPI-Schnittstellen-Paares erfolgt.

4. Verfahren nach einem der vorhergehenden Ansprüche, **dadurch gekennzeichnet, dass** die Datenübertragung zwischen den SPI-Schnittstellen (SPI1a, SPI2a; SPI1b, SPI2b) ausschließlich über eine Kupfer-Datenleitung (M; M') erfolgt.

5. Verfahren nach einem der vorhergehenden Ansprüche, **dadurch gekennzeichnet, dass** die Datenübertragung über mehrere SPI-Schnittstellen-Paare erfolgt.

6. Verfahren nach einem der Ansprüche 1 bis 5, **dadurch gekennzeichnet, dass** die Datenübertragung und/oder die Taktübertragung zwischen den SPI-Schnittstellen (SPI1a, SPI2a; SPI1b, SPI2b) über Optokoppler (O) erfolgt.

7. Verfahren nach einem der Ansprüche 1 bis 5, **dadurch gekennzeichnet, dass** die Datenübertragung über einen Treiberbaustein mit Serienwiderstand (R) in Sicherheitsbauform in der MOSI-Datenleitung (M) erfolgt.

8. Verfahren nach einem der vorhergehenden Ansprüche, **dadurch gekennzeichnet, dass** das Verfahren in sicherheitsrelevanten Bereichen verwendet wird, insbesondere in der Bahntechnik, Luftfahrt, Verteidigung oder Energieversorgung.

9. Verfahren nach einem der vorhergehenden Ansprüche, **dadurch gekennzeichnet, dass** das Verfahren zum Auslesen von Diagnosedaten verwendet wird.
